(19) Europäisches Patentamt
European Patent Office
Office européen des brevets

(11) EP 0 736 561 A2

(12) # EUROPEAN PATENT APPLICATION

(43) Date of publication:
**09.10.1996 Bulletin 1996/41**

(51) Int Cl.[6]: **C08G 64/06**, C08G 63/193

(21) Application number: **96302264.5**

(22) Date of filing: **29.03.1996**

(84) Designated Contracting States:
**BE DE ES FR GB IT NL**

(30) Priority: **06.04.1995 JP 81587/95**

(71) Applicant: **GENERAL ELECTRIC COMPANY**
**Schenectady, NY 12345 (US)**

(72) Inventors:
- **Shimoda, Tomoaki**
  **Moka City, Tochigi Prefecture (JP)**
- **Uno, Kazutoyo**
  **Chiba City, Chiba Prefecture (JP)**
- **Snow, Kevin Mitchell**
  **Mount Vernon, Indiana 47620 (US)**
- **Cipullo, Michael John**
  **Prattville, Alabama 36067 (US)**
- **Shafer, Sheldon Jay**
  **Clifton Park, New York 12065 (US)**

(74) Representative: **Szary, Anne Catherine et al**
**London Patent Operation,**
**GE Technical Services Co. Inc.,**
**Essex House,**
**12-13 Essex Street**
**London WC2R 3AA (GB)**

(54) **Dihydroxy compound mixtures and polymers thereof**

(57) Dihydroxy compounds with outstanding thermal stability contain a specified amount of o,p-bisphenol and polymers of dihydroxy compounds having terminal groups derived from o,p-bisphenol and show outstanding retention stability during molding.

A dihydroxy compound mixture is obtained by adding (A) o,p-bisphenol having a specified structure to (B) a dihydroxy compound having a purity of 99.95% by weight or above as measured by high-performance liquid chromatography using a unit equipped with an ultraviolet absorption detector in which the o,p-bisphenol (A) is contained in the amount of $5 \times 10^{-5}$ to $3 \times 10^{-2}$ moles with respect to a total of 1 mole of the dihydroxy compound.

Polymers have units derived from dihydroxy compounds and terminal groups derived from (A) o,p-bisphenol.

EP 0 736 561 A2

## Description

The present invention relates to dihydroxy compound mixtures and polymers thereof. More specifically, it relates to dihydroxy compound mixtures having outstanding thermal stability and to dihydroxy compound polymers, such as polycarbonate, having outstanding thermal stability and color-matching stability during molding, etc.

Polymers derived from dihydroxy compounds such as polycarbonate, polyarylate, and epoxy resins show outstanding mechanical properties such as impact resistance, are also outstanding in thermal resistance and transparency, and are used in a wide variety of applications, such as various machinery components, electronic components, optical disks, automobile components, and sheets. Among such polymers, polymers such as polycarbonate and polyarylate, which are used in optical applications, must show particularly outstanding transparency and color matching in addition to the aforementioned mechanical properties, and they must also show retention stability during molding (thermal stability, color-matching stability, etc.). For this reason, during molding, various additives such as thermal stabilizers are ordinarily added to such polymers in order to increase their retention stability during such molding.

However, polymers containing additives tend to show bleeding out of the additives during molding, resulting in soiling of the metal mold, and the resulting impurities adhere to the molded product, causing problems with its external appearance. In optical applications such as optical disks and precision applications such as electronic components in particular, it is preferable to use a polymer which has outstanding retention stability so that the use of such additives can be avoided as much as possible.

Moreover, polymers having outstanding retention stability show high purity and outstanding thermal stability as raw materials, so they can be used to manufacture dihydroxy compounds which do not undergo discoloration even at high temperatures.

Methods for manufacturing such dihydroxy compounds, such as bisphenol A, which are of high purity and show outstanding thermal stability, have been proposed in the past, with examples including a method for manufacturing dihydroxy compounds in which raw materials containing essentially no dissolved oxygen are reacted in the presence of a catalyst in order to prevent the formation of colored impurities as byproducts (Japanese Laid-Open Patent No. 93-97742) and a method in which a crude crystalline adduct of bisphenol A and phenol is washed with purified phenol in order to easily remove impurities adhering to the surface of said crystalline adduct (Japanese Laid-Open Patent No. 93-97743).

Moreover, in Japanese Laid-Open Patents Nos. 94-025044 and 94-025045, methods are presented for manufacturing bisphenol A in which bisphenol A containing impurities is melted and subjected to thermal treatment in an oxygen-free atmosphere and subjected to adduct purification with phenol in order to obtain bisphenol A showing outstanding thermal stability.

The inventors of the present invention conducted thorough research on dihydroxy compounds showing outstanding thermal stability, arriving at the surprising discovery that a dihydroxy compound mixture obtained by adding o,p-bisphenol to a high-purity dihydroxy compound and which contained a specified amount of o,p-bisphenol showed superior thermal stability to a high-purity dihydroxy compound which did not contain this o,p-bisphenol (10 ppm or less).

They also discovered that dihydroxy compound polymers having terminal groups derived from this o,p-bisphenol, such as polycarbonate and polyarylate, showed outstanding retention stability during molding, thus arriving at the present invention.

In light of the prior art described above, the purpose of the present invention is to provide dihydroxy compounds with outstanding thermal stability containing a specified amount of o,p-bisphenol. Moreover, the purpose of the present invention is also to provide dihydroxy compound polymers having terminal groups derived from this o,p-bisphenol and showing outstanding retention stability during molding.

The dihydroxy compound mixtures of the present invention are characterized in that

(A) the o,p-bisphenol shown in General Formula [I] below

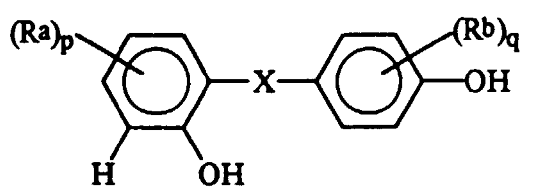

[I]

in which $R^a$ and $R^b$ are independently halogen atoms or monovalent hydrocarbon groups, and they may be identical or different,

p is an integer from 0 to 3, and q is an integer from 0 to 4,
X is

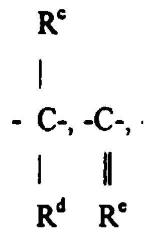

-O-, -S-, -SO-, $-SO_2-$,

or an aliphatic, cycloaliphatic, or aromatic hydrocarbon group having 6 or more carbon atoms, and this hydrocarbon group may be substituted,

where $R^c$ and $R^d$ are hydrogen atoms or monovalent hydrocarbon groups, and $R^e$ is a bivalent hydrocarbon group

is added to (B) a dihydroxy compound having a purity of 99.95% by weight or above as measured by high-performance liquid chromatography using a unit equipped -with an ultraviolet absorption detector,

and in that the aforementioned o,p-bisphenol (A) is contained in the amount of 5 x $10^{-5}$ to 3 x $10^{-2}$ moles with respect to a total of 1 mole of the dihydroxy compound.

These dihydroxy compound mixtures should contain the aforementioned o,p-bisphenol (A) in the amount of 1 x $10^{-4}$ to 3 x $10^{-3}$ with respect to a total of 1 mole of the dihydroxy compound, and preferably 1.5 x $10^{-4}$ to 2 x $10^{-3}$ moles, with the amount of 5 x $10^{-4}$ to 2 x $10^{-3}$ moles being particularly preferred.

The aforementioned o,p-bisphenol (A) should preferably be 2,4'-dihydroxydiphenyl-2,2-propane, and the dihydroxy compound (B) should preferably be 2,2-bis(4-hydroxyphenyl)propane.

The dihydroxy compound mixtures of the present invention show outstanding thermal stability.

The dihydroxy compound mixtures of the present invention are used in polymer manufacturing applications, and they can be used to manufacture polymers showing outstanding retention stability during molding.

The polymers of the present invention are characterized by having units which are derived from the dihydroxy compound and in that at least one of its terminal groups is as shown in General Formula [Ia] below.

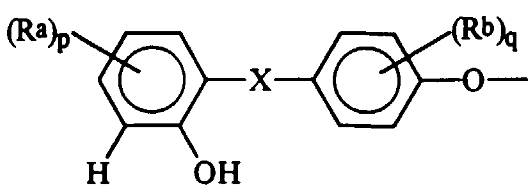

[ I a ]

in which $R^a$, $R^b$, p, q and X are as previously defined.

The polymers of the invention having the terminal group shown in General Formula [Ia] above show outstanding retention stability during molding, but if this terminal group is contained in the amount of 0.1-10% of the total terminal groups, this has the effect of further improving retention stability.

In the present invention, the polymer should preferably be polycarbonate.

The polymers of the present invention should preferably be manufactured using the aforementioned dihydroxy compound mixture as a dihydroxy compound.

The polymers of the present invention show outstanding retention stability during molding, which makes it possible to reduce the amounts of additives such as thermal stabilizers used, and this prevents soiling of the metal mold.

The polymers of the present invention are suitable for optical applications such as optical disks and precision applications such as electronic components, etc., and they are particularly well suited for optical applications.

The following is a specific explanation of the dihydroxy compound mixtures and polymers of the present invention.

The dihydroxy compound mixture of the present invention is obtained by adding

(A) the o,p-bisphenol shown in General Formula [I] above

to (B) a dihydroxy compound having a purity of 99.95% by weight or above as measured by high-performance liquid chromatography using a unit equipped with an ultraviolet absorption detector.

(A) o,p-bisphenol

The (A) o,p-bisphenol which forms the dihydroxy compound mixture of the present invention is shown below in General Formula [I].

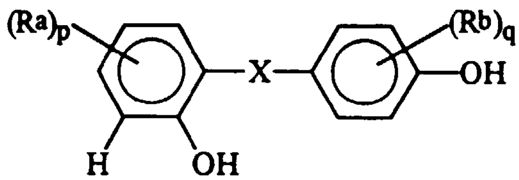

[I]

in which $R^a$, $R^b$, p, q and X are as previously defined.

Specific examples ofthis o,p-bisphenol (A) include
2,4'-dihydroxydiphenyl- 1,1-methane,
2,4'-dihydroxydiphenyl- 1,1-ethane,
2,4'-dihydroxydiphenyl-2,2-propane,
2,4'-dihydroxydiphenyl-2,2-butane,
2,4'-dihydroxydiphenyl-2,2-octane,
2,4'-dihydroxydiphenyl 1,1-dichloropentane,
2,4'-dihydroxydiphenyl-1,1-dichlorohexane,
2,4'-diphenol-3,3-isatin,
2,4'-dihydroxydiphenyl-9,9-fluorene,
2,4'-dihydroxydiphenyl-1,1'-p-diisopropylbenzene,
2,4'-dihydroxydiphenyl-1,1'-m-diisopropylbenzene,
1-methyl-1-(4-hydroxyphenyl)-4-[(dimethyl-2-hydroxyphenyl)methyl]cyclohexane, 2-[1-[3-(4-hydroxyphenyl)-4-methylcyclohexyl]-1-methylethyl]phenol,
2,4'-[1-methyl-4-(1-methylethyl)-1,3-cyclohexanediyl]bisphenol,
2,4'-dihydroxydiphenyl ether,
2,4'-dihydroxydiphenyl sulfide,
2,4'-dihydroxydiphenyl sulfoxide,
2,4'-dihydroxydiphenyl sulfone,
and catechol.

This o,p-bisphenol (A) should preferably be an isomer of the dihydroxy compound (B) mentioned below.

Of these substances, 2,4'-dihydroxydiphenyl-2,2-propane (referred to in the following as o,p-bisphenol or o,p-BPA) is preferred, and this substance is useful for industrial application.

This o,p-bisphenol (A) may be synthesized by any conventionally-known synthesis method for dihydroxy compounds and then obtained by isolation. Specifically, for example, a monovalent hydroxy compound and a carbonyl compound are reacted in the presence of an acidic catalyst such as hydrochloric acid or a strongly-acidic ion-exchange resin, and the o,p-bisphenol is then obtained by isolation from the reaction mixture.

More specifically, when phenol and acetone are reacted in the presence of an acidic catalyst, a reaction product containing o,p-BPA is obtained as a byproduct together with p,p-BPA (2,2-bis[4-hydroxyphenyl]propane).

o,p-BPA and p,p-BPA are respectively purified and isolated from this reaction mixture, and p,p-BPA is crystallized as an adduct (addition product) of p,p-BPA and phenol by adding an excess amount of phenol to the reaction mixture and then dissolving and cooling it. The precipitated adduct crystals are separated from the mother liquor by filtration, centrifugation, etc. Moreover, o,p-BPA is present in the mother liquor in a relatively high concentration together with phenol or other byproducts; crystallization and purification are repeated using other solvents, or o,p-BPA having a purity of 99% by weight or above may be obtained by distillation purification.

Moreover, high-purity o,p-BPA may be obtained by directly subjecting the reaction mixture to precision distillation prior to purification and separation.

(B) Dihydroxy compound

There are no particular restrictions on the (B) dihydroxy compounds forming the dihydroxy compound mixture of the present invention, but these compounds may be as shown in General Formula [II] below.

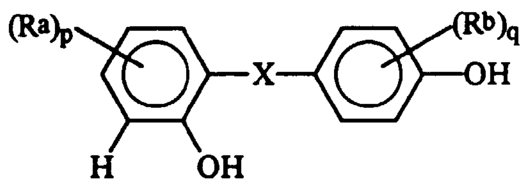

[ II ]

in which neither of the OH groups is bound to the ortho position with respect to X and $R^a$, $R^b$, p, q and X are as previously defined.

The above-mentioned dihydroxy compound (B) is generally known as p,p-bisphenol, o,m-bisphenol, m,m-bisphenol, etc.

Specific examples of this dihydroxy compound (B) include a bis(hydroxyaryl)alkane such as bis(4-hydroxyphenyl) methane,
1,1-bis(4-hydroxyphenyl)ethane,
2,2-bis(4-hydroxyphenyl)propane,
2,2-bis(4-hydroxyphenyl)butane,
2,2-bis(4-hydroxyphenyl)octane,
bis(4-hydroxyphenyl)phenylmethane,
2,2-bis(4-hydroxy-1-methylphenyl)propane,
1,1-bis(4-hydroxy-t-butylphenyl)propane,
2,2-bis(4-hydroxy-3-bromophenyl)propane;
4,4'-dihydroxydiphenyl-1,1'-p-diisopropylbenzene,
4,4'-dihydroxydiphenyl-1,1'-m-diisopropylbenzene,
or 4,4'-dihydroxydiphenyl-9-9-fluorene;
a bis(hydroxyaryl)cycloalkane such as
1,1-bis(4-hydroxyphenyl)cyclopentane,
1,1-bis(4-hydroxyphenyl)cyclohexane,
1-methyl-1-(4-hydroxyphenyl)-4-[(dimethyl-4-hydroxyphenyl)methyl]cyclohexane,
4-[1-[3-(4-hydroxyphenyl)-4-methylcyclohexyl]-1-methylethyl]phenol,
or 2,2,2',2'-tetrahydro-3,3,3',3'-tetramethyl-1,1'-spirobi[IH-indene]-6,6'-diol;
a dihydroxydiaryl ether such as 4,4'-dihydroxydiphenyl ether or 4,4'-dihydroxy-3,3'-dimethyldiphenyl ether;
a dihydroxydiaryl sulfide such as 4,4'-dihydroxydiphenyl sulfide or 4,4'-dihydroxy-3,3'-dimethyldiphenyl sulfide;
a dihydroxydiaryl sulfoxide such as 4,4'-dihydroxydiphenyl sulfoxide or 4,4'-dihydroxy-3,3'-dimethyldiphenyl sulfoxide;
a dihydroxydiaryl sulfone such as 4,4'-dihydroxydiphenyl sulfone or 4,4'-dihydroxy-3,3'-dimethyldiphenyl sulfone,
or a dihyroxydiarylisatin such as 4,4'-diphenol-3,3-isatin.

Moreover, examples of dihydroxy compounds other than those shown in General Formula [II] above include

dihydroxydiarylxanthines such as 3,6-dihydroxy-9,9-dimethylxanthine,

resorcinol and substituted resorcinols such as 3-methylresorcinol, 3-ethylresorcinol, 3-propylresorcinol, 3-butylresorcinol, 3-t-butylresorcinol, 3-phenylresorcinol, 3-cumylresorcinol, 2,3,4,6-tetrafluororesorcinol, or 2,3,4,6-tetrabromoresorcinol;

or a hydroquinone or a substituted hydroquinone such as 3-methylhydroquinone, 3-ethylhydroquinone, 3-propylhydroquinone, 3-butylhydroquinone, 3-t-butylhydroquinone, 3-phenylhydroquinone, 3-cumylhydroquinone, 2,3,5,6-tetramethylhydroquinone, 2,3,5,6-tetra-t-butylhydroquinone, 2,3,5,6-tetrafluorohydroquinone, or 2,3,5,6-tetrabromohydroquinone.

Among these substances, 2,2-bis(4-hydroxyphenyl)propane (referred to below as p,p-bisphenol A or p,p-BPA) is preferred, and this substance is useful for industrial application.

The above dihydroxy compound (B) has a purity of 99.95% by weight or above as measured using a high-performance chromatography unit equipped with an ultraviolet detector.

This dihydroxy compound (B) may be obtained by conventionally-known synthesis methods as described for the manufacturing of o,p-bisphenol (A), and by purifying the synthesis product obtained, one can obtain a dihydroxy compound having a purity of 99.95% by weight or above. For example, as described above, it may be crystallized and purified as an adduct (addition product) of phenol and p,p-BPA from a reaction mixture obtained by reacting phenol and acetone in the presence of an acidic catalyst. Alternatively, as needed, this crystallization and purification may be repeated two or more times, and the phenol may be removed using a commonly-known technique such as reduced-pressure distillation, stripping, or bubbling in order to obtain p,p-BPA having a purity of 99.95% by weight or above.

Dihydroxy compound mixture

The dihydroxy compound mixture of the present invention is obtained by adding the above-mentioned o,p-bisphenol (A) to a dihydroxy compound (B) having a purity of 99.95% by weight or above. The o,p-bisphenol (A) should be added in the amount of $5 \times 10^{-5}$ to $3 \times 10^{-2}$ moles, and preferably $1 \times 10^{-4}$ to $3 \times 10^{-3}$ moles, with respect to a total of 1 mole of the dihydroxy compound, or more preferably, in the amount of $1.5 \times 10^{-4}$ to $2 \times 10^{-3}$ moles, with the amount of $5 \times 10^{-4}$ to $2 \times 10^{-3}$ moles being particularly preferred.

The dihydroxy compound (B) described above, which is of high purity and essentially contains no impurities (o,p-bisphenol (A)), cannot be said to show outstanding thermal stability, such as color stability on exposure to heat. In contrast, the dihydroxy compound mixture obtained by adding a specified amount of o,p-bisphenol (A) to this dihydroxy compound (B) shows highly outstanding thermal stability.

Moreover, if the amount of o,p-bisphenol (A) in the dihydroxy compound mixture is less than the aforementioned $5 \times 10^{-5}$ moles, it will be difficult to improve thermal stability, and when this dihydroxy compound mixture is used as a raw material, it may be impossible to obtain a polymer which shows outstanding retention stability (color-matching stability, melting stability, etc.) during molding.

In addition, if the o,p-bisphenol (A) is contained in the dihydroxy compound mixture in the amount of $3 \times 10^{-3}$ moles or more, thermal stability will be sufficiently outstanding, and even if a greater amount is used, the thermal stability of the dihydroxy compound mixture will not be further improved. Accordingly, in dihydroxy compound mixtures used in manufacturing polycarbonate and polyarylate in particular, it is not necessary to use more than $3 \times 10^{-3}$ moles of o,p-bisphenol (A). Furthermore, dihydroxy compound mixtures containing more than $3 \times 10^{-3}$ moles of o,p-bisphenol (A) may show reduced reaction speed during polymer manufacturing, and the glass transition temperature (Tg) of the polymer may also decrease.

As mentioned above, the dihydroxy compound mixture of the present invention is manufactured by adding o,p-bisphenol (A) in the above-mentioned amounts to a dihydroxy compound (B) in a solid or molten state having an HPLC purity of 99.95% by weight or above and then causing it to disperse.

Polymers

The polymers of the present invention have units derived from a dihydroxy compound, and at least one of their terminal groups is as shown in General Formula [Ia] below.

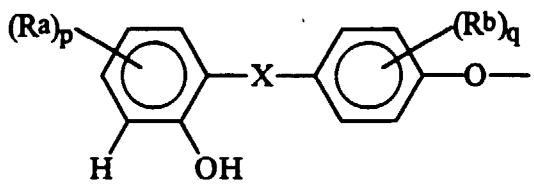

[Ia]

in which $R^a$, $R^b$, p, q and X are as previously defined.

This terminal group is derived from the o,p-bisphenol shown in General Formula [I] above, and the hydroxyl group at the p- or m-position of the carbon bound to X in the formula is formed by bonding to the polymer unit terminal groups.

A specific example of a monomer which can form the terminal group shown in General Formula [Ia] was mentioned above as o,p-bisphenol (A).

In this o,p-bisphenol (A) shown in General Formula [I], the reactivity of the hydroxyl group which bonds to the o-position carbon of the carbon bound to X is markedly lower than that of the hydroxyl group which binds to the p-position carbon of the carbon bound to X due to steric hindrance, it shows virtually the same action as end-sealing agents of monovalent hydroxy compounds used in manufacturing polycarbonate and polyarylate, and it is thought to be introduced in the form of the terminal group shown in General Formula [Ia]. This can be confirmed by $^{13}$C-NMR analysis.

Together with o,p-bisphenol (A), the polymers of the present invention may also have terminal groups derived from

other commonly-known end-sealing agents.

The polymers of the present invention may contain the terminal group shown in Formula [Ia] in any desired amount with respect to the total terminal groups, but the amount of 0.1-10% is preferable. If the polymers contain the terminal group shown in Formula [Ia] in this amount, their retention stability can be sufficiently increased.

Polymers which contain the terminal group shown in Formula [Ia] in an amount greater than 10% of the total terminal groups show virtually the same retention stability as those which contain this terminal group in the amount of 0.1-10%, and they show a tendency toward reduced Tg.

Provided that the polymers of the present invention are polymers derived from dihydroxy compounds, there are no particular restrictions on them, but polycarbonate, polyarylate, and polyester carbonate are preferred, with polycarbonate being particularly preferred.

Moreover, the polymers of the present invention should preferably be manufactured using the above-mentioned dihydroxy compound mixture as the raw material dihydroxy compound.

In cases where the polymer of the invention is polycarbonate, it may be manufactured by any commonly-known phosgene method (surface polymerization, solution polymerization), the melting method, or the solid-phase polymerization method.

In the phosgene method, polycarbonate may be manufactured by reacting a halogenated carbonyl compound such as phosgene, a haloformate compound, the dihydroxy compound (B) shown in Formula [II] above, the o,p-bisphenol (A) shown in Formula [I] above, and as needed, another end-sealing agent, by a commonly-known method.

Moreover, in the melting method, the polycarbonate can be manufactured by heating/melting polymerization according to a commonly-known method from carbonic acid diesters such as diphenyl carbonate, ditolyl carbonate, bis (chlorophenyl) carbonate, m-cresyl carbonate, dinaphthyl carbonate, bis(diphenyl) carbonate, diethyl carbonate, dimethyl carbonate, dibutyl carbonate, or dicyclohexyl carbonate, the o,p-bisphenol (A) shown in Formula [I] above, and as needed, other end-sealing agents.

In solid-phase polymerization, low-molecular-weight polycarbonate manufactured by the aforementioned phosgene method or melting method is crystallized, and the polycarbonate is then manufactured by allowing polymerization to proceed at a high temperature.

Furthermore, in the above-mentioned polycarbonate manufacturing methods, polyester carbonate may be manufactured by using a dicarboxylic acid, dicarboxylic acid halide, or dicarboxylic acid ester together with phosgene or a carbonic acid diester.

Examples ofthis dicarboxylic acid or carboxylic acid ester include

aromatic dicarboxylic acids such as terephthalic acid, isophthalic acid, terephthalic acid chloride, isophthalic acid chloride, diphenyl terephthalate, or diphenyl isophthalate;

aliphatic dicarboxylic acids such as succinic acid, glutaric acid, adipic acid, pimelic acid, suberic acid, azelaic acid, sebacic acid, decanedioic acid, dodecanedioic acid, sebacic acid chloride, decanedioic acid chloride, dodecanedioic acid chloride, diphenyl sebacate, diphenyl decanedioate, or diphenyl dodecanedioate;

and cycloaliphatic dicarboxylic acids such as cyclopropanedicarboxylic acid, 1,2-cyclobutanedicarboxylic acid, 1,3-cyclobutanedicarboxylic acid, 1,2-cyclopentanedicarboxylic acid, 1,3-cyclopentanedicarboxylic acid, 1,2-cyclohexanedicarboxylic acid, 1,3-cyclohexanedicarboxylic acid, 1,4-cyclohexanedicarboxylic acid,

cyclopropanedicarboxylic acid chloride, 1,2-cyclobutanedicarboxylic acid chloride, 1,3-cyclobutanedicarboxylic acid chloride, 1,2-cyclopentanedicarboxylic acid chloride, 1,3-cyclopentanedicarboxylic acid chloride, 1,2-cyclohexanedicarboxylic acid chloride, 1,3-cyclohexanedicarboxylic acid chloride, 1,4-cyclohexanedicarboxylic acid chloride,

diphenyl cyclopropanedicarboxylate, diphenyl 1,2-cyclobutanedicarboxylate, diphenyl 1,3-cyclobutanedicarboxylate, diphenyl 1,2-cyclopentanedicarboxylate, diphenyl 1,3-cyclopentanedicarboxylate, diphenyl 1,2-cyclohexanedicarboxylate, diphenyl 1,3-cyclohexanedicarboxylate, and diphenyl 1,4-cyclohexanedicarboxylate.

Moreover, in the polyester carbonate manufacturing methods described above, polyester can be manufactured using a dicarboxylic acid, dicarboxylic acid halide, or dicarboxylic acid ester alone, without requiring the use of a carbonate precursor such as phosgene or a carbonic acid diester. In particular, when an aromatic dicarboxylic acid is used, the polymer commonly referred to as polyarylate can be obtained.

Moreover, in manufacturing the polymer of the present invention, together with the aforementioned dihydroxy compound, a polyfunctional compound having three or more functional groups per molecule may also be used.

A compound having a phenolic hydroxyl group or a carboxyl group should preferably be used as this polyfunctional compound, with compounds containing three phenolic hydroxyl groups being particularly preferred. Specific examples include the following:

1,1,1-tris(4-hydroxyphenyl)ethane,
2,2',2"-tris(4-hydroxyphenyl)diisopropylbenzene, α-methyl-α,α',α'-tri(4-hydroxypheny)1,4-diethylbenzene,
α,α',α"-tris(4-hydroxyphenyl)-1,3,5-triisopropylbenzene, phloroglucinol, 4,6-dimethyl-2,4,6-tris(4-hydroxyphenyl)heptane-2 [sic],
1,3,5-tris(4-hydroxyphenyl)benzene,

2,2-bis[4,4-(4,4'-dihydroxydiphenyl)cyclohexyl]propane, trimellitic acid, 1,3,5-benzenetricarboxylic acid, and pyromellitic acid.

Among these substances, the use of 1,1,1-tris(4-hydroxyphenyl)ethane, α,α,α"-tris(4-hydroxyphenyl)-1,3,5-triisopropylbenzene, etc., is particularly preferred.

The polyfunctional compound used should preferably be present in the amount of 0.03 moles or less with respect to 1 mole of the dihydroxy compound, and more preferably in the amount of 0.001-0.02 moles, with 0.001-0.01 moles being particularly preferred.

Looking at methods for manufacturing the polymers of the present invention, in the above-described phosgene method, tertiary amines, quaternary ammonium salts, tertiary phosphines, quaternary phosphonium salts, nitrogen-containing heterocyclic compounds and their salts, imino ether and its salts, or compounds containing amide groups may be used as a catalyst.

In this phosgene method, as large amounts of alkali metal compounds or alkaline earth metal compounds are used as halogenated hydrogen scavengers of substances such as hydrochloric acid produced during the reaction, it is preferable to carry out sufficient washing and purification so that such impurities will not remain in the polymer as residue after manufacturing.

In the melting method and solid-phase polymerization method, (a) an alkali metal compound and/or alkaline earth metal compound should preferably be used as a catalyst.

Moreover, specific examples of the alkali metal compound or alkaline earth metal compound include organic acid salts, inorganic acid salts, oxides, hydroxides, hydrides, and alcoholates of alkali metals and alkaline earth metals.

More specifically, examples of the alkali metal compound include sodium hydroxide, potassium hydroxide, lithium hydroxide, sodium bicarbonate, potassium bicarbonate, lithium bicarbonate, sodium carbonate, potassium carbonate, lithium carbonate, sodium acetate, potassium acetate, lithium acetate, sodium stearate, potassium stearate, lithium stearate, sodium hydroxyborate, lithium hydroxyborate, sodium phenoxyborate, sodium benzoate, potassium benzoate, lithium benzoate, disodium hydrogen phosphate, dipotassium hydrogen phosphate, dilithium hydrogen phosphate, disodium salts, dipotassium salts, and dilithium salts of bisphenol A, and sodium salts, potassium salts, and lithium salts of phenol, etc.

Furthermore, specific examples of the alkaline earth metal compound include calcium hydroxide, barium hydroxide, magnesium hydroxide, strontium hydroxide, calcium bicarbonate, barium bicarbonate, magnesium bicarbonate, strontium bicarbonate, calcium carbonate, barium carbonate, magnesium carbonate, strontium carbonate, calcium acetate, barium acetate, magnesium acetate, strontium acetate, and strontium stearate, etc.

These substances may be used in combinations of 2 or more.

This (a) alkali metal compound and/or alkaline earth metal compound should be used in the amount of $10^{-8}$ to $10^{-3}$ moles with respect to a total of l mole of the aforementioned aromatic dihydroxy compound, with $10^{-7}$ to $2 \times 10^{-6}$ moles being preferred, and the amount of $10^{-7}$ to $8 \times 10^{-7}$ moles being particularly preferable.

When the (a) alkali metal compound and/or alkaline earth metal compound used as a catalyst is used in the amount of $10^{-8}$ to $10^{-3}$ moles with respect to 1 mole of the aromatic dihydroxy compound, it is possible to manufacture a polymer having a high degree of polymerization activity, and when the acidic compounds specified in the following are added in amounts which do not adversely affect the polymer obtained, the basicity shown by these compounds can be sufficiently neutralized or weakened.

Moreover, in the melting method and solid-phase polymerization method, (b) a basic compound should preferably be used together with the above-mentioned (a) alkali metal compound and/or alkaline earth metal compound as a catalyst.

For example, one may use a nitrogen-containing basic compound which decomposes readily or is volatile at high temperatures as this (b) basic compound, with specific examples including the following compounds.

Ammonium hydroxides having alkyl, aryl, and aralkyl groups, such as tetramethylammonium hydroxide ($Me_4NOH$), tetraethylammonium hydroxide ($Et_4NOH$), tetrabutylammonium hydroxide ($BU_4NOH$), and trimethylbenzylammonium hydroxide ($\phi$-$CH_2(Me)_3NOH$), etc.,

tertiary amines such as trimethylamine, triethylamine, dimethylbenzylamine, triphenylamine, trioctylamine, tridodecylamine, and trioctadecylamine,

secondary amines indicated by the formula $R_2NH$ (in the formula, R indicates an alkyl group such as methyl or ethyl or an aryl group such as phenyl or tolyl),

primary amines indicated by the formula $RNH_2$ (in the formula, R has the same meaning as indicated above),

imidazoles such as 2-methylimidazole and 2-phenylimidazole,

guanidines,

or basic salts such as ammonia, tetramethylammonium borohydride ($Me_4NBH_4$), tetrabutylammonium borohydride ($Bu_4NBH_4$), tetrabutylammonium tetraphenylborate ($Bu_4NBPh_4$), and tetramethylammonium tetraphenylborate ($Me_4NBPh_4$).

Of these substances, tetraalkyl ammonium hydroxides, particularly tetraalkylammonium hydroxides for electronic

use which have a low content of metal impurities, are particularly preferable.

The aforementioned (b) nitrogen-containing basic compound should be included in the amount of $10^{-6}$ to $10^{-1}$ moles, or preferably $10^{-5}$ to $10^{-2}$ moles, with respect to a total of 1 mole of the aromatic dihydroxy compound.

When one uses a combination of an (a) alkali metal compound and/or alkaline earth metal compound and, in the aforementioned amounts, a (b) nitrogen-containing basic compound as a catalyst, one can carry out the polycondensation reaction at a sufficiently rapid rate, thus obtaining a high-molecular-weight polymer with a high degree of polymerization activity.

As the aforementioned catalysts are used in the melting method and solid-phase method, an acidic compound should preferably be added to the reaction product in order to neutralize it.

Examples of this acidic compound include sulfonic acids such as benzenesulfonic acid and p-toluenesulfonate, methylbenzenesulfonate,' ethylbenzenesulfonate, butylbenzenesulfonate, octylbenzenesulfonate, or phenylbenzenesulfonate, and sulfonic acid esters such as methyl p-toluenesulfonate, ethyl p-toluenesulfonate, butyl p-toluenesulfonate, octyl p-toluenesulfonate, and phenyl p-toluenesulfonate.

In the melting method and solid-phase polymerization method, as the purification involved in the phosgene method is essentially not carried out, it is preferable to subject the polymer to reduced-pressure treatment following neutralization of the catalyst.

In carrying out such reduced-pressure treatment, there are no particular restrictions on the treatment device used, with examples including reaction vessels equipped with reduced-pressure units and extruders equipped with reduced-pressure units.

When a reactor is used, either a vertical-tank-type reaction vessel or a horizontal-tank-type reaction vessel may be used, with a horizontal-tank-type reaction vessel being preferred.

In carrying out reduced-pressure treatment using the reaction vessel described above, treatment should be carried out at a pressure of 0.05-750 mmHg, and preferably at 0.05-5 mmHg.

Such reduced-pressure treatment should preferably be carried out for 10 seconds to 15 minutes when using an extruder, and for 5 minutes to 3 hours when using a reaction vessel. The reduced-pressure treatment should preferably be carried out at a temperature of approximately 240-350°C.

Moreover, in carrying out reduced-pressure treatment in an extruder, either a monoaxial extruder equipped with a vent or a biaxial extruder may be used, and pelletization can be carried out during reduced-pressure treatment with the extruder.

In carrying out reduced-pressure treatment in an extruder, such treatment should be carried out under conditions of pressure of 1-750 mmHg, and preferably 5-700 mmHg.

In the course of the above-mentioned treatment, any raw material monomers remaining in the polymer as residue are either reduced or completely eliminated.

The polymers of the present invention obtained in this manner show virtually no soiling of the metal mold and show outstanding molding productivity. In the case of polycarbonate in particular, as the terminal groups themselves act as antioxidants, it is virtually unnecessary to add other thermal stabilizers, and molding can be carried out continuously without interruptions due to soiling of the metal mold, thus achieving outstanding molding productivity.

The above polymers of the present invention can be widely used, particularly in optical applications such as sheets, lenses, and compact disks, transparent product applications such as outdoor automobile applications, and housings for various types of machinery.

The polymers of the present invention are particularly well suited for optical applications and precision applications.

Moreover, among these polymers, polycarbonate shows a particularly strong effect of the invention and is well suited for optical applications.

It is virtually unnecessary to add thermal stabilizers to the polymer of the present invention, but provided this does not adversely affect the purpose of the invention, one may add thermal stabilizers, ultraviolet absorbers, mold-releasing agents, colorants, anti-static agents, slipping agents, antiblocking agents, lubricants, defogging agents, natural oils, synthetic oils, wax, organic fillers, inorganic fillers, etc.

Specific examples of such thermal stabilizers include phosphorus compounds, phenol-class stabilizers, organic thioether-class stabilizers, and hindered amine stabilizers.

Examples of phosphorus compounds include phosphoric acid, phosphorous acid, hypophosphorous acid, pyrophosphoric acid, polyphosphoric acid, phosphoric esters, and phosphorous esters.

Examples of phosphoric esters include trialkyl phosphates such as

trimethyl phosphate,
triethyl phosphate,
tributyl phosphate,
trioctyl phosphate,
tridecyl phosphate,
trioctadecyl phosphate,

distearyl pentaerythrityl diphosphate,
tris(2-chloroethyl) phosphate,
tris(2,3-dichloropropyl) phosphate,
tricycloalkyl phosphates such as tricyclohexyl phosphate,
and triaryl phosphates such as triphenyl phosphate,
tricresyl phosphate,
tris(nonylphenyl) phosphate,
and 2-ethylphenyl diphenyl phosphate.

Moreover, a compound having the formula shown in the general formula below can be given as an example of a phosphorous ester.

$$P(OR)_3$$

(Where R indicates an alicyclic hydrocarbon group, an aliphatic hydrocarbon group, or an aromatic hydrocarbon group. These may be either identical or different.)

Examples of the compound indicated by this formula include trialkyl phosphites such as trimethyl phosphite,
triethyl phosphite,
tributyl phosphite,
trioctyl phosphite,
tris(2-ethylhexyl) phosphite,
trinonyl phosphite,
tridecyl phosphite,
trioctadecyl phosphite,
tristearyl phosphite,
tris(2-chloroethyl) phosphite,
and tris(2,3-dichloropropyl) phosphite,
tricycloalkyl phosphites such as tricyclohexyl phosphite,
triaryl phosphites such as triphenyl phosphite,
tricresyl phosphite,
tris(ethylphenyl) phosphite,
tris(2,4-di-t-butylphenyl) phosphite,
tris(nonylphenyl) phosphite,
and tris(hydroxyphenyl) phosphite,
and aryl alkyl phosphites such as phenyl didecyl phosphite,
diphenyl decyl phosphite,
diphenyl isooctyl phosphite,
phenyl isooctyl phosphite,
and 2-ethylhexyl diphenyl phosphite.

Moreover, examples of phosphorous esters include
distearyl pentaerythrityl diphosphite and
bis(2,4-di-t-butylphenyl) pentaerythrityl diphosphite.

These substances may also be used individually or in combination.

Among these substances, a phosphorous ester is preferred, with aromatic phosphorous ester being preferred, and tris(2,4-di-t-butylphenyl) phosphite being particularly preferred.

Examples of phenolic stabilizers include n-octadecyl 3(4-hydroxy-3',5'-di-t-butylphenyl)propionate, tetrakis[methylene 3-(3',5'-di-t-butyl-4-hydroxyphenyl)propionate]methane [sic], 1,1,3-tri(2-ahyl-4-hydroxy-5-t-butylphenyl)butane, distearyl (4-hydroxy-3-methyl-5-t-butyl)benzylmalonate, and 4-hydroxymethyl-2,6-di-t-butylphenol, and these substances may be used either individually or in combinations of 2 or more.

Examples of thioether stabilizers include dilauryl thiodipropionate, distearyl thiodipropionate, dimyristyl 3,3'-thiodipropionate, ditridecyl 3,3'-thiodipropionate, and pentaerythritol tetrakis(beta-laurylthiopropionate).

These substances may also be used individually in combinations of 2 or more.

Furthermore, examples of hindered amine stabilizers include bis(2,2,6,6-tetramethyl-4-piperidyl) sebacate, bis (1,2,2,6,6-pentamethyl-4-piperidyl) sebacate, 1-[2-{3-(3,5-di-t-butyl-4-hydroxyphenyl)propionyloxy}ethyl]-4-{3-(3,5-di-t-but yl-4-hydroxyphenyl)propionyloxy}-2,2,6,6-tetramethylpiperidyl [sic], 8-benzyl-7,7,9,9-tetramethyl-3-octyl-1,2,3-triazaspiro[4,5]undecane-2,4-dione,
4-benzoyloxy-2,2,6,6-tetramethylpiperazine, bis(1,2,2,6,6-pentamethyl-4-piperidyl) 2-(3,5-di-t-butyl-4-hydroxybenzyl)-2-n-butylmalonate, and tetrakis(2,2,6,6-tetramethyl-4-piperidyl) 1,2,3,4 butanetetracarboxylate.

These substances may be used either individually or in combinations of 2 or more.

These thermal stabilizers should be used in an amount of 0.001-5 parts by weight with respect to 100 parts by weight of polycarbonate, and preferably 0.005-0.5 parts by weight, with an amount of 0.01-0.3 parts by weight being particularly preferred.

Moreover, there are no particular restrictions on the ultraviolet absorber used, with an ordinary ultraviolet absorber being suitable, such as a salicylic acid ultraviolet absorber, a benzophenone ultraviolet absorber, a benzotriazole ultraviolet absorber, or a cyanoacrylate ultraviolet absorber.

Specific examples of salicylic acid ultraviolet absorbers include phenyl salicylate and p-t-butylphenyl salicylate.

Examples of benzophenone ultraviolet absorbers include
2,4-dihydroxybenzophenone, 2-hydroxy-4-methoxybenzophenone,
2,2'-dihydroxy-4-methoxybenzophenone,
2,2'-dihydroxy-4,4'-dimethoxybenzophenone,
2-hydroxy-4-methoxy-2'-carboxybenzophenone,
2-hydroxy-4-methoxy-5-sulfobenzophenone trihydrate,
2-hydroxy-4-n-octyloxybenzophenone,
2,2',4,4'-tetrahydroxybenzophenone,
4-dodecyloxy-2-hydroxybenzophenone,
bis(5-benzoyl4-hydroxy-2-methoxyphenyl)methane, and
2-hydroxy-4-methoxybenzophenone-5-sulfonic acid.

Examples of benzotriazole ultraviolet absorbers include
2(2'-hydroxy-5'-methylphenyl)benzotriazole,
2-(2'-hydroxy-3',5'-di-t-butylphenyl)benzotriazole,
2-(2'-hydroxy-3'-t-butyl-5'-methylphenyl)-5-chlorobenzotriazole,
2-(2'-hydroxy-3',5'-di-t-butylphenyl)-5-chlorobenzotriazole,
2-(2'-hydroxy-5'-t-octylphenyl)benzotriazole,
2-(2'-hydroxy-3',5'-di-t-amylphenyl)benzotriazole,
2-[2'-hydroxy-3'-(3",4", 5",6"-tetrahydrophthalimidomethyl)-5'-methylphenyl]benzotriazole, and
2,2'-methylenebis[4-(1,1,3,3-tetramethylbutyl)-6-(2H-benzotriazol-2-yl)phenol].

Examples of cyanoacrylate ultraviolet absorbers include 2-ethylhexyl 2-cyano-3,3-diphenylacrylate and ethyl 2-cyano-3,3-diphenylacrylate. These substances may be used either individually or in combinations of 2 or more.

These ultraviolet absorbers are ordinarily used in the amount of 0.001-5 parts by weight with respect to 100 parts by weight of the polycarbonate, and preferably 0.005-1.0 parts by weight, with the amount of 0.01-0.5 parts by weight being particularly preferred.

Moreover, there are no particular restrictions on mold-releasing agents, with a general mold-releasing agent being suitable.

For example, examples of hydrocarbon mold-releasing agents include natural and synthetic paraffins, polyethylene waxes, and fluorocarbons.

Examples of fatty acid mold-releasing agents include higher fatty acids such as stearic acid and hydroxystearic acid and oxy fatty acids.

Examples of fatty acid amide mold-releasing agents include fatty acid amides such as stearic acid amide and ethylenebisstearamide and alkylenebis(fatty acid amide).

Examples of alcohol mold-releasing agents include aliphatic alcohols such as stearyl alcohol and cetyl alcohol, polyvalent alcohols, polyglycol, and polyglycerol.

Examples of fatty acid ester mold-releasing agents include fatty acid lower alcohol esters such as butyl stearate and pentaerythritol tetrastearate, fatty acid polyvalent alcohol esters, and fatty acid polyglycol esters.

Examples of silicone mold-releasing agents include silicone oil.

These substances may be used either individually or in combinations of 2 or more.

These mold-releasing agents are ordinarily used in the amount of 0.001-5 parts by weight with respect to 100 parts by weight of the polycarbonate, and preferably 0.005-1 parts by weight, with the amount of 0.01-0.5 parts by weight being particularly preferred.

Furthermore, the colorant used may be a pigment or a dye. Colorants include inorganic and organic colorants, and either may be used, or a combination of the two may be used.

Specific examples of inorganic colorants include oxides such as titanium dioxide and red iron oxide, hydroxides such as aluminum white, sulfides such as zinc sulfide, selenium, ferrocyanides such as Prussian blue, chromates such as zinc chromate and molybdenum red, sulfates such as barium sulfate, carbonates such as calcium carbonate, silicates such as ultramarine, phosphates such as manganese violet, carbons such as carbon black, and metal powder colorants such as bronze powder and aluminum powder.

Specific examples of organic colorants include nitroso colorants such as naphthol green B, nitro colorants such

as naphthol yellow S, azo colorants such as lithol red, Bordeaux 10B, naphthol red, and chromophthal yellow AGR (Pigment Yellow 147 supplied by Ciba-Geigy) phthalocyanine colorants such as phthalocyanine blue and fast sky blue, and condensed polycyclic colorants such as indanthrone blue, quinacridone violet, and dioxazine violet.

These colorants may be used either individually or in combinations of 2 or more.

These colorants are ordinarily used in the amount of 1 x $10^{-6}$ to 5 parts by weight with respect to 100 parts by weight of the polycarbonate, and preferably 1 x $10^{-5}$ to 3 parts by weight, with the amount of 1 x $10^{-5}$ to 1 parts by weight being particularly preferred.

A compound having 1 or more epoxy groups per molecule may be used as an acidic substance scavenger. Specific examples include

epoxidized soy bean oil,
epoxidized linseed oil,
phenyl glycidyl ether,
allyl glycidyl ether,
t-butylphenyl glycidyl ether,
3,4-epoxycyclohexylmethyl 3',4'-epoxycyclohexanecarboxylate,
3,4-epoxy-6-methylcyclohexylmethyl
3',4'-epoxy-6'-methylcyclohexanecarboxylate,
2,3-epoxycyclohexylmethyl
3',4'-epoxycyclohexanecarboxylate,
4(3,4-epoxy-5-methylcyclohexyl)butyl 3',4'-epoxycyclohexanecarboxylate
3,4-epoxycyclohexylethylene oxide,
cyclohexylmethyl 3,4-epoxycyclohexanecarboxylate,
3,4-epoxy-6-methylcyclohexylmethyl 6'-methylcyclohexanecarboxylate bisphenol A diglycidyl ether,
tetrabromobisphenol A glycidyl ether,
diglycidyl ester of phthalic acid,
diglycidyl esters of hexahydrophthalic acid,
bisepoxydicyclopentadienyl ether, bisepoxyethylene glycol,
bisepoxycyclohexyl adipate,
butadiene diepoxide,
tetraphenylethylene epoxide,
octyl epoxyphthalate,
epoxidized polybutadiene,
3,4-dimethyl-1,2-epoxycyclohexane,
3,5-dimethyl-1,2-epoxycyclohexane,
3-methyl-5-t-butyl-1,2-epoxycyclohexane,
octadecyl 2,2-dimethyl-3,4-epoxycyclohexanecarboxylate,
n-butyl 2,2-dimethyl-3,4-epoxycyclohexanecarboxylate,
cyclohexyl 2-methyl-3,4-epoxycyclohexanecarboxylate,
n-butyl 2-isopropyl-3,4-epoxy-5-methylcyclohexanecarboxylate,
octadecyl 3,4-epoxycyclohexanecarboxylate,
2-ethylhexyl 3,'4,-epoxycyclohexanecarboxylate,
4,6-dimethyl-2,3-epoxycyclohexyl 3',4'-epoxycyclohexanecarboxylate,
4,5-epoxytetrahydrophthalic anhydride,
3-t-butyl-4,5-epoxytetrahydrophthalic anhydride,
diethyl 4,5-epoxy-cis-1,2-cyclohexanedicarboxylate,
and di-n-butyl 3-t-butyl-4,5-epoxy-cis-1,2-cyclohexanedicarboxylate.

Of the above substances, an alicyclic epoxy compound should preferably be used, with 3,4-epoxycyclohexylmethyl 3',4'-epoxycyclohexanecarboxylate being particularly preferred.

These substances may be used either individually or in combinations of 2 or more.

This epoxy compound should preferably be added in the amount of 1-2,000 ppm, and more preferably in the amount of 10-1,000 ppm.

As the polymers obtained in the present invention themselves show outstanding retention stability during molding, even when they are mixed with other polymers, one can obtain molded products showing outstanding color matching and transparency.

Examples of other polymers which may be used include commonly-known polymers, whether thermoplastics or thermosetting plastics, such as polyethylene, polypropylene, polystyrene, ABS resin, PMMA resin, polytrifluoroethylene, polytetrafluoroethylene, polyacetal, polyphenylene oxide, PET, PBT, polycarbonate, polyarylate, polyamide, polyimide, polyamide imide, polyether imide, polysulfone, polyether sulfone, paraoxybenzoyl-class polyesters, polysulfide,

epoxy resins, and various rubbers.

The dihydroxy compound mixture of the present invention shows outstanding thermal stability.

This dihydroxy compound mixture is well suited for use as a raw material of polymers showing outstanding retention stability (thermal stability, color-matching stability, etc.) during molding.

The polymers of the present invention have terminal groups derived from specified dihydroxy compounds and show outstanding retention stability during molding.

The following is an explanation of the present invention with reference to practical examples, but the invention is not limited to these examples.

In the present invention, purity analysis, elemental analysis, and testing of color fastness on exposure to heat of the dihydroxy compound, as well as evaluation of the component units and end structure, intrinsic viscosity (IV), color matching [YI], optical transmittance, haze, retention stability, and mold soiling of the polycarbonate, were carried out in the following manner.

Dihydroxy compounds

[Purity]

0.2 g of the sample was dissolved in 5 cc of acetonitrile, and purity was measured using an UV detector and a high-performance liquid chromatography (HPLC) unit manufactured by Shimazu Seisakusho.

[Elemental analysis]

Quantitative analysis of metal impurities in a 100 mg sample was carried out using a frameless atomic absorption spectrometer (Model TSX-10 manufactured by Mitsubishi Kasei K.K.).

[Stability of molten color on exposure to heat]

55 g of the sample was heated to 170°C, and after a specified time had elapsed, color tone (APHA; Hazen color no.) was measured.

Polycarbonate

[Structural Units and End Structure]

An analysis of the end structure of polycarbonate was conducted by means of $^{13}C$-NMR measurement. The percentages of terminal groups were calculated according to carbon peak strengths (1)-(4) as shown in the following diagram.

Chemical shift

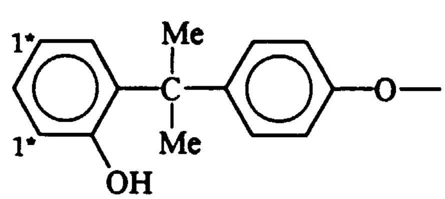

(o,p-BPA)-

1* 117.6ppm

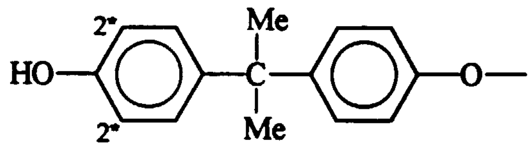

(p,p-BPA)- 2* 114.8ppm

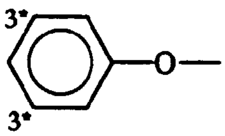

(PhO)- 3* 129.5ppm

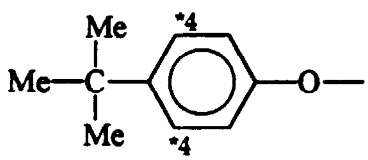

(t-Bu-PhO)- 4* 126.8ppm

The conditions of $^{13}C$-NMR measurement were as follows.
Measurement unit: $^{13}C$-NMR GX-270 (manufactured by JEOL Ltd.)
Measuring solvent: $CDCl_3$
Standard substance: $CDCl_3$ (77.00 ppm)
Sample preparation method: 0.4 g of the polymer was dissolved in 3 ml of $CDCl_3$.

Measurement conditions: 110 MHz, integration 30,000 times

[Intrinsic Viscosity [IV]]

Intrinsic viscosity was measured in methylene chloride at 20°C using an Ubbelohde viscosimeter.

[Yellowing index]

An injection-molded plate measuring 3 mm in thickness was molded at a cylinder temperature of 290°C, an injection pressure of 1,000 kg/cm, a cycle time of 45 seconds, and a mold temperature of 100°C, X, Y, and Z values were measured using the ND-1001 DP Colorand color difference meter manufactured by Nihon Denshoku Kogyo K.K. using the transmission method, and the yellowing index [YI] was measured.

$$YI = 100 (1.277 X - 1.060 Z)/Y$$

[Optical transmittance]

This was measured according to the ASTM D 1003 method using an injection-molded plate for color matching measurement.

[Haze]

The haze of an injection-molded plate for color matching measurement was measured using an NDH-200 manufactured by Nihon Denshoku Kogyo K.K.

[Retention stability]

After the resin was retained in the cylinder of an injection molding machine for 15 minutes at a temperature of 320°C, injection molding was carried out at this temperature, and the molded plate obtained was measured for measurement of color matching (YI).

[Soiling of Metal Mold]

Using an extrusion molding machine with a cylinder temperature of 350°C, an extrusion pressure of 1,000 kg/cm, a cycle time of 6 seconds, and a metal mold temperature of 80°C, 1,000 disks measuring 1.2 mm in thickness and 12 cm in diameter were continuously molded, and the metal mold and surface of the disks were observed.

Example 1

<u>Manufacturing of bisphenol A with a purity of 99.95% or above</u>

Crude bisphenol A (p,p-BPA) was prepared from acetone and phenol using cation-exchange resin. This crude bisphenol A and phenol were mixed in a 1-to-5 ratio (weight ratio), the mixture was heated to 80°C to make a uniform solution, it was then cooled to 42°C, and the precipitated solid was filtered in a nitrogen atmosphere.

Next, the filtered and removed solid was washed with molten phenol, and an adduct of bisphenol A and phenol was obtained in the form of a white solid.

This adduct consisted of bisphenol A and phenol bound in a molar ratio of 1: 1, but it took the form of a mixture containing an excess of 0.58 moles of phenol with respect to 1 mole of bisphenol A, and the molar ratio of bisphenol A and phenol in this mixture was 1 : 1.58.

Phenol was again mixed with this adduct in a ratio of crude bisphenol A to phenol of 1 to 5 (weight ratio), this mixture was heated to 80°C to make a uniform solution, it was then cooled to 42°C, and the precipitated solid was filtered in a nitrogen atmosphere.

Next, the filtered and removed solid was rinsed with molten phenol, and an adduct of bisphenol A and phenol was obtained in the form of a white solid. The molar ratio of bisphenol A to phenol was 1 : 1.52.

This adduct was heated to 180°C while blowing in nitrogen, the phenol was removed at a reduced pressure of 50 torr, and purified bisphenol A (p,p-BPA) was obtained.

HPLC analysis showed that the purity was 99.97% by weight.

Moreover, according to elemental analysis, the amounts of Fe, Ni, and Cr contained were 0.05 ppm or less, and the amounts of Cl and S were 0.1 ppm or less.

Example 2

<u>Manufacturing of o,p-bisphenol</u>

In Example 1, the mother liquor obtained during crystallization purification and the phenol wash solution were recovered, and crude o,p-bisphenol (o,p-BPA) was obtained by reduced-pressure distillation. This was crystallization-purified 3 times using toluene solvent to obtain purified o,p-BPA found in HPLC analysis to have a purity of 99.53% by weight.

According to elemental analysis, the amounts of Fe, Ni, and Cr contained were 0.05 ppm or less, and the amounts of Cl and S were 0.1 ppm or less.

Example 3

The amount of 3 x $10^{-3}$ moles (approximately 3,000 ppm) of the o,p-BPA obtained in Example 2 with respect to 1 mole of the purified p,p-BPA obtained in Example 1 was added and dispersed in the purified p,p-BPA of Example 1 while it was in a molten state following distillation to obtain a prilled dihydroxy compound mixture. The molten color on exposure to heat of this dihydroxy compound mixture was then measured. The results for purity and molten colors on exposure to heat are shown in Table 1.

Examples 4-8

A prilled dihydroxy compound mixture was obtained in the same manner as in Example 3, except for the fact that in Example 3, the o,p-BPA obtained in Example 2 was added in the amount shown in Table 1 with respect to 1 mole of the purified p,p-BPA obtained in Example 1. The results are shown in Table 1.

Comparison Example 1

The molten color on exposure to heat of purified p,p-BPA prill obtained in Example 1 was measured. The results are shown in Table 1.

Comparison Example 2

The molten color of commercial BPA (manufacturer unknown) was measured on exposure to heat. The results are shown in Table 1.

Table 1

| | Dihydroxy compound mixture | | Molten color on exposure to heat (Hazan color) | | | |
|---|---|---|---|---|---|---|
| | p,p-BPA content (% by weight) | o,p-BPA content (ppm) | After 30 minutes | After 2 hours | After 4 hours | After 6 hours |
| Example 3 | 99.67 | 3000 | 5 | 15 | 20 | 20-25 |
| Example 4 | 99.77 | 2,000 | 5 | 15 | 20 | 20-25 |
| Example 5 | 99.87 | 1,000 | 5 | 15 | 20 | 20-25 |
| Example 6 | 99.92 | 500 | 5 | 15 | 20 | 25 |
| Example 7 | 99.94 | 300 | 5 | 20 | 25 | 25 |
| Example 8 | 98.97 | 10,000 | 5 | 15 | 20 | 20-25 |
| Comparison Example 1 | 99.97 | <10 | 10 | 30 | 45 | 60 |
| Comparison Example 2 | 99.91 | 330 | 5 | 25 | 40 | 60 |

Example 9

200 moles of the purified p,p-BPA obtained in Example 1, 6 moles of the purified o,p-BPA obtained in Example 2 (3 x $10^{-2}$ moles with respect to 1 mole of p,p-BPA), 200 l of dichloromethane, and 200 l of deionized water were placed in a 2 $m^3$ tank-type agitator tank, and the mixture was made into a suspension while blowing in nitrogen.

60 g of sodium hydrosulfite and 110 l of an aqueous solution containing 540 moles of dissolved sodium hydroxide were added together to the above suspension, and the above-mentioned dihydroxy compound was dissolved at 15°C. 250 moles of phosgene was added to this solution at a rate of 4.2 moles/min. The reaction temperature was increased to 36°C.

After the phosgene was blown in, 32 g of triethylamine was added, the reaction was allowed to proceed for an additional 60 minutes, and polymerization was carried out. After this, the reaction solution was allowed to stand, the organic layer was removed, neutralization was carried out using hydrochloric acid, and it was then washed with deionized water until the electrolytes were eliminated. 100 1 of toluene and 250 1 of deionized water were added to the

dichloromethane solution of the polycarbonate obtained, heating to 98°C was carried out in order to remove the dichloromethane and toluene, and polycarbonate powder was obtained.

The intrinsic viscosity [IV] of the polymer obtained was 0.49 dl/g. The results are shown in Table 2.

Example 10

A polymer was obtained by the same method as in Example 9, except that 200 moles of the bisphenol obtained in Example 3 ($3 \times 10^{-3}$ moles of o,p-BPA with respect to 1 mole of p,p-BPA) and 6 moles of phenol were used instead of the purified p,p-BPA obtained in Example 1 and the purified o,p-BPA obtained in Example 2 which were used in Example 9.

The results are shown in Table 2.

Example 11

A polymer was obtained by the same method as in Example 10, except that 200 moles of the bisphenol obtained in Example 4 ($2 \times 10^{-3}$ moles of o,p-BPA with respect to 1 mole of p,p-BPA) was used instead of the bisphenol obtained in Example 3.

The results are shown in Table 2.

Example 12

A polymer was obtained by the same method as in Example 10, except for the fact that 200 moles ofthe bisphenol obtained in Example 6 ($5 \times 10^{-4}$ moles of o,p-BPA with respect to 1 mole of p,p-BPA) was used instead of the bisphenol obtained in Example 3.

The results are shown in Table 2.

Example 13

A polymer was obtained by the same method as in 1 Example 10, except for the fact that 200 moles of the bisphenol obtained in Example 7 ($3 \times 10^{-4}$ moles of o,p-BPA with respect to 1 mole of p,p-BPA) was used instead of the bisphenol obtained in Example 3.

The results are shown in Table 2.

Example 14

A polymer was obtained by the same method as in Example 10, except for the fact that 6 moles of p-t-butylphenol was used instead of the phenol used in Example 10.

The results are shown in Table 2.

Example 15

0.44 kilomoles of the dihydroxy compound mixture obtained in Example 3 and 0.46 kilomoles of diphenyl carbonate were placed in a 250 l tank-type agitating tank, and after nitrogen substitution, the mixture was melted at 140°C.

Next, the mixture was heated to a temperature of 180°C, 0.000176 moles of sodium hydroxide ($4 \times 10^{-7}$ moles/mole of bisphenol A) and 0.11 moles of tetramethylammonium hydroxide ($2.5 \times 10^{-4}$ moles/mole of bisphenol A) were added, and agitation was carried out for 30 minutes.

After this, at the same time as the temperature was increased to 210°C, the pressure was gradually reduced to 200 mmHg, after 30 minutes, the pressure was gradually decreased to 15 mmHg while simultaneously increasing the temperature to 240°C, while keeping the temperature and pressure constant, the amount of phenol distilled was measured, and when distillation of the phenol was complete, the atmosphere was returned to atmospheric pressure using nitrogen. The time required for the reaction was 1 hour. The intrinsic viscosity [IV] of the reaction product obtained was 0.15 dl/g.

Next, this reaction product was pressurized and fed using a gear pump into a centrifuge-type thin-film evaporator in order to continue the reaction. The temperature and pressure of the thin-film evaporator were controlled to 270°C and 2 mmHg respectively. From the lower part of the evaporator, the reaction product was then fed into a biaxial horizontal agitation polymerization tank (L/D = 3, blade stirrer rotary diameter 220 mm, internal volume 80 l) controlled to 293°C and 0.2 mmHg at a rate of 40 kg/h, and polymerization was then carried out with a residence time of 30 minutes.

Next, with the polymer in a molten state, it was fed into a biaxial extruder (L/D = 17.5, barrel temperature of 285°C)

using a gear pump, the amount of 0.7 ppm of butyl p-toluenesulfonate with respect to the resin was added and kneaded, the mixture was passed through a die and formed into strands, and it was then cut into pellets using a cutter.

The intrinsic viscosity [IV] of the polymer obtained was 0.49 dl/g.

The results are shown in Table 2.

Example 16

A polymer was obtained by the same method as in 1 Example 15, except that 200 moles of the dihydroxy compound mixture obtained in Example 4 ($2 \times 10^{-3}$ moles of o,p-BPA with respect to 1 mole of p,p-BPA) was used instead of the dihydroxy compound mixture obtained in Example 3 which was used in Example 15.

The results are shown in Table 2.

Example 17

A polymer was obtained by the same method as in Example 15, except that 200 moles of the dihydroxy compound mixture obtained in Example 6 ($5 \times 10^{-4}$ moles of o,p-BPA with respect to 1 mole of p,p-BPA) was used instead of the dihydroxy compound mixture obtained in Example 3 which was used in Example 15.

The results are shown in Table 2.

Example 18

Prepolymer having an intrinsic viscosity [IV] of 0.15 dl/g obtained in the course of manufacturing in Example 15 was crushed, it was immersed in 200 l of acetone, and the crystallized prepolymer was filtered. 40 kg of the crystallized prepolymer was placed in a tank-type agitation tank, and while nitrogen was blown in at 220°C (melting point: 230°C), agitation was carried out for 8 hours at a controlled pressure of 5 mmHg to obtain polymer particles.

The intrinsic viscosity [IV] of the polymer obtained was 0.15 dl/g.

The results are shown in Table 2.

Comparison Example 3

A polymer was obtained by the same method as in Example 9, except for the fact that 6 moles of phenol was used instead of the purified o,p-BPA obtained in Example 4 which was used in Example 9.

The results are shown in Table 2.

Example 19

A polymer was obtained by kneading 5 kg of the polycarbonate obtained in Example 9 and 45 kg of the polycarbonate obtained in Comparison Example 3 at 285°C in a monoaxial extruder.

The results are shown in Table 2.

Comparison Example 4

A polymer was obtained by the same method as in Comparison Example 3, except for the fact that 200 moles of the commercial BPA 200 of Comparison Example 2 was used instead of the purified p,p-BPA obtained in Example 1 which was used in Comparison Example 3.

The results are shown in Table 2.

Comparison Example 5

A polymer was obtained by adding 550 ppm of n-octadecyl 3(4-hydroxy-3',5'-di-t-butylphenyl)propionate (commercial name: A050, manufactured by Adeka Gas Co.) to the polymer of Comparison Example 3 and kneading the mixture at 285°C in a monoaxial extruder.

The results are shown in Table 2.

Comparison Example 6

A polymer was obtained by adding 550 ppm of tris(2,4-di-t-butylphenyl) phosphite (commercial name: 2112, Adeka Gas Co.) to the polymer of Comparison Example 3 and kneading the mixture at 285°C in a monoaxial extruder.

The results are shown in Table 2.

Table 2

| | Example 9 | Example 10 | Example 11 | Example 12 | Example 13 | Example 14 |
|---|---|---|---|---|---|---|
| Manufacturing method | Phosgene method | Phosgene method | Phosgene method | Phosgene method | Phosgene method | Phosgene method |
| Amount of o,p-BPA (moles) with respect to 1 mole of p,p-BPA | $3\times10^{-2}$ | $3\times10^{-3}$ | $2\times10^{-3}$ | $5\times10^{-4}$ | $3\times10^{-4}$ | $3\times10^{-3}$ |
| End structure and content (%) | | | | | | |
| PhO- | 0 | 90 | 92 | 99 | 98 | 0 |
| p-t-BuPhO- | 0 | 0 | 0 | 0 | 0 | 90 |
| p,p-BPA- | 8 | 1 | 1 | 1 | 1 | 1 |
| o,p-BPA | 92 | 9 | 7 | 2 | 1 | 9 |
| Initial physical properties | | | | | | |
| IV (dl/g) | 0.49 | 0.50 | 0.50 | 0.51 | 0.51 | 0.50 |
| YI | 1.3 | 1.3 | 1.3 | 1.4 | 1.4 | 1.3 |
| Optical transmittance (%) | 90.8 | 90.8 | 90.8 | 90.8 | 90.8 | 90.8 |
| Haze | 0.2 | 0.2 | 0.2 | 0.2 | 0.2 | 0.2 |
| Retention stability YI | 1.4 | 1.4 | 1.4 | 1.6 | 1.7 | 1.4 |
| Soiling of metal mold | None | None | None | None | None | None |

Table 2 (cont.)

| | Example 15 | Example 16 | Example 17 | Example 18 | Comparison Example 3 |
|---|---|---|---|---|---|
| Manufacturing method | Melting method | Melting method | Melting method | Solid-phase polymerization method | Phosgene method |
| Amount of o,p-BPA (moles) with respect to 1 mole of p,p-BPA | $3\times10^{-3}$ | $2\times10^{-3}$ | $5\times10^{-4}$ | $3\times10^{-3}$ | 0 |
| End structure and content (%) | | | | | |
| PhO- | 87 | 87 | 90 | 85 | 99 |
| p-t-BuPhO- | 0 | 0 | 0 | 0 | 0 |
| p,p-BPA- | 6 | 8 | 8 | 10 | 1 |
| o,p-BPA | 7 | 5 | 2 | 5 | 0 |
| Initial physical properties | | | | | |
| IV (dl/g) | 0.50 | 0.50 | 0.51 | 0.50 | 0.50 |
| YI | 1.2 | 1.2 | 1.2 | 1.5 | 2.0 |
| Optical transmittance (%) | 90.8 | 90.8 | 90.8 | 90.8 | 90.6 |
| Haze | 0.2 | 0.2 | 0.2 | 0.2 | 0.3 |
| Retention stability | | | | | |
| YI | 1.3 | 1.3 | 1.4 | 1.7 | 2.7 |
| Soiling of metal mold | None | None | None | None | None |

Table 2 (cont.)

| | Example 19 | Comparison Example 4 | Comparison Example 5 | Comparison Example 6 |
|---|---|---|---|---|
| Manufacturing method | Phosgene method (kneading) | Phosgene method | Phosgene method, additive kneading | Phosgene method, additive kneading |
| Amount of o,p-BPA (moles) with respect to 1 mole of p,p-BPA | $3\times10^{-3}$ | 0 | 0 | 0 |
| End structure and content (%) | | | | |
| PhO- | 89 | 98 | 99 | 99 |
| p-t-BuPhO- | 0 | 0 | 0 | 0 |
| p,p-BPA- | 2 | 2 | 1 | 1 |
| o,p-BPA | 9 | 0 | 0 | 0 |
| Initial physical properties | | | | |
| IV (dl/g) | 0.49 | 0.50 | 0.50 | 0.50 |
| YI | 1.5 | 1.8 | 1.7 | 1.6 |
| Optical transmittance (%) | 90.8 | 90.7 | 90.7 | 90.7 |
| Haze | 0.2 | 0.3 | 0.2 | 0.2 |
| Retention stability YI | 1.7 | 2.3 | 2.0 | 1.8 |
| Soiling of metal mold | None | None | Yes | Yes |

## Claims

1. A dihydroxy compound mixture, characterized in that said mixture is obtained by adding (A) the o,p-bisphenol shown in Formula I below

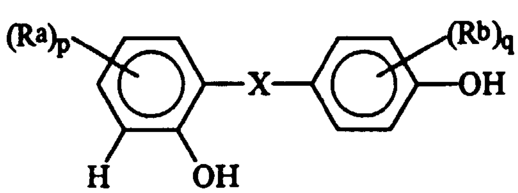

I

in which $R^a$ and $R^b$ are independently halogen atoms or monovalent hydrocarbon groups, and they may be identical or different,
p is an integer from 0 to 3, and q is an integer from 0 to 4,
X is

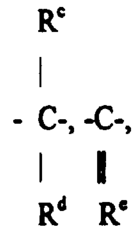

$-O-$, $-S-$, $-SO-$, $-SO_2-$,

or an aliphatic, cycloaliphatic, or aromatic hydrocarbon group having 6 or more carbon atoms, and this hydrocarbon group may be substituted,

where $R^c$ and $R^d$ are hydrogen atoms or monovalent hydrocarbon groups, and $R^e$ is a bivalent hydrocarbon group

to (B) a dihydroxy compound having a purity of 99.95% by weight or above as measured by high-performance liquid chromatography using a unit equipped with an ultraviolet absorption detector,

and the o,p-bisphenol (A) is in the amount of $5 \times 10^{-5}$ to $3 \times 10^{-2}$ moles with respect to a total of 1 mole of the dihydroxy compound.

2. The dihydroxy compound mixture of Claim 1 containing o,p-bisphenol (A) in the amount of $1 \times 10^{-4}$ to $3 \times 10^{-3}$ moles with respect to a total of 1 mole of the dihydroxy compound.

3. The dihydroxy compound mixture of Claim 1, wherein the o,p-bisphenol (A) is 2,4'-dihydroxydiphenyl-2,2-propane.

4. The dihydroxy compound mixture of Claim 1 wherein the dihydroxy compound (B) is 2,2-bis(4-hydroxyphenyl) propane.

5. A polymer, having units derived from a dihydroxy compound and at least 1 of its terminal groups is as shown below in Formula Ia

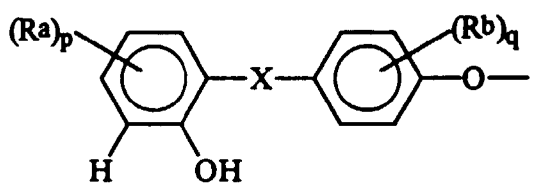

I a

in which $R^a$ and $R^b$ are independent halogen atoms or monovalent hydrocarbon groups, and they may be identical or different,

p is an integer from 0 to 3, and q is an integer from 0 to 4,

X is

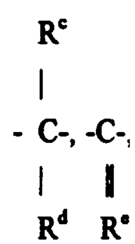

$-O-$, $-S-$, $-SO-$, $-SO_2-$,

or an aliphatic, cycloaliphatic, or aromatic hydrocarbon group having 6 or more carbon atoms, and this

hydrocarbon group may be substituted,

where $R^c$ and $R^d$ are hydrogen atoms or monovalent hydrocarbon groups, and $R^e$ is a bivalent hydrocarbon group.

**6.** The polymer of Claim 5 containing the terminal group of formula Ia in the amount of 0.1-10% of the total terminal groups of the polymer.

**7.** The polymer of Claim 5 wherein said polymer is polycarbonate.

**8.** The polymer of Claim 5 wherein the dihydroxy compound is a dihydroxy compound mixture obtained by adding (A) the o,p-bisphenol shown in Formula I below

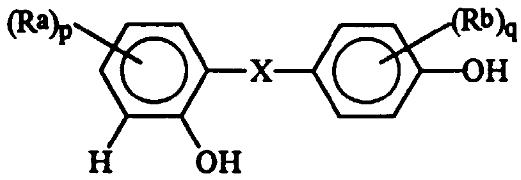

I

to (B) a dihydroxy compound having a purity of 99.95% by weight or above as measured by high-performance liquid chromatography using a unit equipped with an ultraviolet absorption detector,

and the o,p-bisphenol (A) is in the amount of $5 \times 10^{-5}$ to $3 \times 10^{-2}$ moles with respect to a total of 1 mole of the dihydroxy compound.

**9.** An optical disk molded from the polymer of Claim 5.

**10.** A method of making the polymer of Claim 5 comprising melt polycondensing the dihydroxy compound and terminating the polymer with a terminal group of Formula Ia.